(19) Europäisches Patentamt
European Patent Office
Office européen des brevets

(11) **EP 4 145 563 B1**

(12) **EUROPEAN PATENT SPECIFICATION**

(45) Date of publication and mention of the grant of the patent:
**20.05.2026 Bulletin 2026/21**

(21) Application number: **21797319.7**

(22) Date of filing: **09.03.2021**

(51) International Patent Classification (IPC):
$C01G\ 53/00$ (2025.01)   $H01M\ 4/131$ (2010.01)
$H01M\ 4/525$ (2010.01)

(52) Cooperative Patent Classification (CPC):
**H01M 4/525; C01G 53/42; H01M 4/364;**
C01P 2002/52; C01P 2002/54; C01P 2004/03;
C01P 2004/22; C01P 2004/45; C01P 2004/61;
C01P 2006/12; C01P 2006/40; Y02E 60/10

(86) International application number:
**PCT/JP2021/009127**

(87) International publication number:
**WO 2021/220626 (04.11.2021 Gazette 2021/44)**

(54) **POSITIVE ELECTRODE ACTIVE MATERIAL FOR NON-AQUEOUS ELECTROLYTE SECONDARY BATTERIES, AND NON-AQUEOUS ELECTROLYTE SECONDARY BATTERY**

POSITIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT

MATÉRIAU ACTIF D'ÉLECTRODE POSITIVE POUR BATTERIES RECHARGEABLES À ÉLECTROLYTE NON AQUEUX, ET BATTERIE RECHARGEABLE À ÉLECTROLYTE NON AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2020 JP 2020079710**

(43) Date of publication of application:
**08.03.2023 Bulletin 2023/10**

(73) Proprietor: **Panasonic Intellectual Property Management Co., Ltd.**
**Osaka-shi, Osaka 540-6207 (JP)**

(72) Inventors:
• **SAITO, Motoharu**
**Chuo-ku, Osaka-shi, Osaka 540-6207 (JP)**
• **OGASAWARA, Takeshi**
**Chuo-ku, Osaka-shi, Osaka 540-6207 (JP)**

(74) Representative: **Novagraaf International SA**
**Chemin de l'Echo 3**
**1213 Onex, Geneva (CH)**

(56) References cited:
WO-A1-2018/179916   CN-A- 107 644 982
JP-A- 2019 175 711   JP-A- 2020 504 416
JP-A- H09 320 601   US-A1- 2010 276 217
US-A1- 2020 083 531   US-A1- 2023 163 298

**Description**

TECHNICAL FIELD

The present disclosure generally relates to a positive electrode active material for a non-aqueous electrolyte secondary battery and a non-aqueous electrolyte secondary battery using the positive electrode active material.

BACKGROUND ART

In a non-aqueous electrolyte secondary battery such as a lithium-ion battery, a positive electrode active material significantly affects battery performance such as input-output characteristics, a capacity, and cycle characteristics. Commonly used for the positive electrode active material is a lithium-transition metal composite oxide containing metal elements such as Ni, Co, Mn, and Al, and composed of secondary particles formed by aggregation of primary particles. Since the positive electrode active material has various properties depending on its composition, particle shape, and the like, many investigations have been made on various positive electrode active materials.

For example, Patent Literature 1 discloses a positive electrode active material composed of primary single crystal particles having a spherical or sphere-like shape and a small amount of secondary aggregation particles, in which a particle diameter of the primary single crystal particles therein is 0.5 $\mu$m to 10 $\mu$m, and a total percentage of particles having a particle diameter of 5 $\mu$m or smaller exceeds 60%, and is composed of a lithium-nickel-cobalt-manganese composite oxide. Patent Literature 1 states that use of this positive electrode active material improves stability at high temperature, cycle characteristics at high voltage, and safety of a battery.

Patent Literature 2 discloses a positive electrode active material which is manufactured using ion exchange in which Na is substituted by Li.

CITATION LIST

PATENT LITERATURE

PATENT LITERATURE 1: Japanese Unexamined Patent Application Publication No. 2018-45998
PATENT LITERATURE 2: US 2010 0276217 A1

SUMMARY

In a non-aqueous electrolyte secondary battery, it is known that particle cracking of a positive electrode active material occurs with charging and discharging. The occurrence of particle cracking of the positive electrode active material increases the number of particles isolated from a conductive path in a positive electrode to lower a battery capacity, for example. Thus, a positive electrode active material that is unlikely to cause the particle cracking and has high durability is required.

A positive electrode active material for a non-aqueous electrolyte secondary battery according to claim 1 is composed of at least one of single particles and secondary particles each including 10 or less primary particles, the single particles and the primary particles being a lithium-transition metal composite oxide containing 85 mol% or more of Ni based on a total number of moles of metal elements excluding Li, wherein a Li-site occupancy of the lithium-transition metal composite oxide is 98% or more, a particle cross section of the single particles and the primary particles has a polygon shape including a side having a length of 1.5 $\mu$m or longer, and at least three interior angles of the polygon are 45° to 160°.

A non-aqueous electrolyte secondary battery according to claim 4 comprises: a positive electrode having: a positive electrode core; and a positive electrode mixture layer provided on a surface of the positive electrode core and including the positive electrode active material; a negative electrode; and a non-aqueous electrolyte, wherein a BET specific surface area of the positive electrode mixture layer before charging and discharging is 2.6 m$^2$/g or less.

The positive electrode active material for a non-aqueous electrolyte secondary battery according to the present disclosure is unlikely to cause particle cracking with charging and discharging, and has excellent durability. In addition, the non-aqueous electrolyte secondary battery using the positive electrode active material according to the present disclosure has, for example, a high capacity maintenance rate after a charge-discharge cycle and excellent cycle characteristics.

BRIEF DESCRIPTION OF DRAWINGS

FIG. 1 is a sectional view of a non-aqueous electrolyte secondary battery of an example of an embodiment.
FIG. 2 is a view schematically illustrating a particle cross section of a positive electrode active material of an example of an embodiment.
FIG. 3 is a cross-sectional SEM image of a positive electrode mixture layer of an example of an embodiment.

DESCRIPTION OF EMBODIMENTS

As described above, inhibition of the particle cracking of the positive electrode active material that can occur with charging and discharging is an important problem for improving battery performance such as cycle characteristics. The present inventors have intensively investigated to develop a positive electrode active material that is unlikely to cause the particle cracking and has high durability, and as a result, have successfully synthesized a lithium-transition metal composite oxide with a high Ni content composed of at least one of single particles and secondary particles each including 10 or less primary particles, and a particle cross section of the single particles and the primary particles has a specific polygon shape. A positive electrode active material composed of this composite oxide has higher durability than a conventional positive electrode active material, and remarkably contributes to improvement in the cycle characteristics of the battery.

Hereinafter, an example of embodiments of the positive electrode active material for a non-aqueous electrolyte secondary battery according to the present disclosure and a non-aqueous electrolyte secondary battery using the positive electrode active material will be described in detail with reference to the drawings. It is anticipated in advance to selectively combine a plurality of embodiments and modified examples described below.

Hereinafter, a cylindrical battery in which a wound electrode assembly 14 is housed in a bottomed cylindrical exterior housing can 16 will be exemplified, but an exterior housing body of the battery is not limited to a cylindrical exterior housing can and may be, for example, a rectangular exterior housing can (rectangular battery), a coin-shaped exterior housing can (coin battery), or an exterior housing body constituted with laminated sheets including a metal layer and a resin layer (laminate battery). The electrode assembly may be a stacked electrode assembly in which a plurality of positive electrodes and a plurality of negative electrodes are alternatively stacked with separators interposed therebetween.

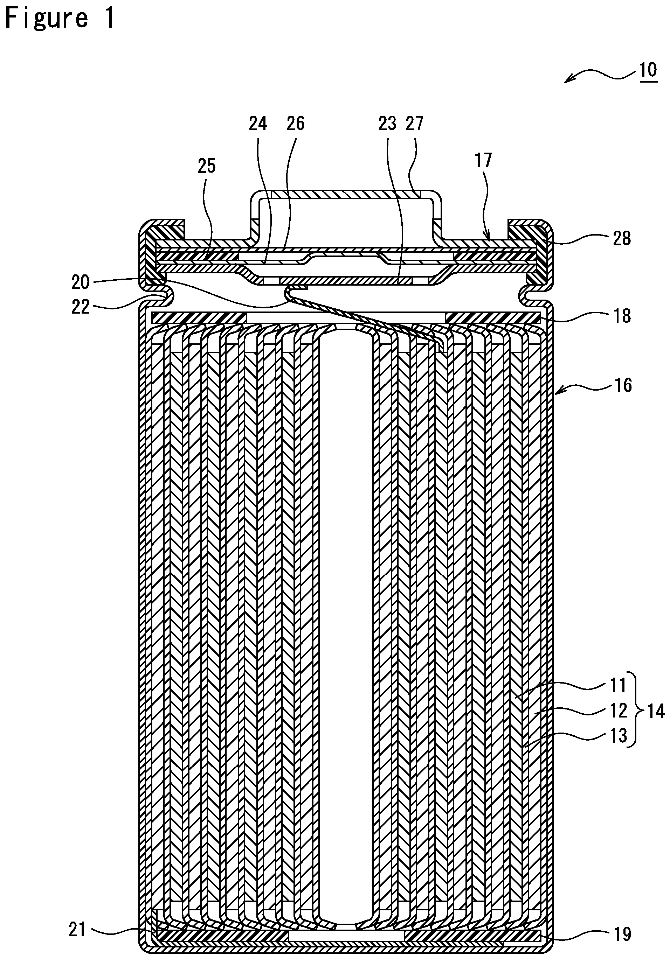

FIG. 1 is a sectional view of a non-aqueous electrolyte secondary battery 10 of an example of an embodiment. As illustrated in FIG. 1, the non-aqueous electrolyte secondary battery 10 comprises the wound electrode assembly 14, a non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound with the separator 13 interposed therebetween. The exterior housing can 16 is a bottomed cylindrical metallic container having an opening at one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted solvent in which at least some hydrogens in these solvents are substituted with halogen atoms such as fluorine. For the electrolyte salt, a lithium salt such as $LiPF_6$ is used, for example. The electrolyte is not limited to a liquid electrolyte, and may be a solid electrolyte.

Any of the positive electrode 11, negative electrode 12, and separator 13 constituting the electrode assembly 14 is a band-shaped elongated body, and spirally wound to be alternatively stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two separators 13 are formed to be one size larger than at least the positive electrode 11, and disposed to, for example, sandwich the positive electrode 11. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole in the insulating plate 18 toward a side of the sealing assembly 17, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved part 22 in which a part of a side part thereof projects inside for supporting the sealing assembly 17 is formed. The grooved part 22 is preferably formed in a circular shape along a circumferential direction of the exterior housing can 16, and supports the sealing assembly 17 with the upper surface thereof. The sealing assembly 17 is fixed on the upper part of the exterior housing can 16 with the grooved part 22 and with an end part of the opening of the exterior housing can 16 calked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected each other. The lower vent member 24 and the upper vent member 26 are connected at each of central parts thereof, and the insulating member 25 is interposed between each of the circumferential parts of the vent members 24 and 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through the cap 27 opening.

Hereinafter, the positive electrode 11, negative electrode 12, and separator 13, which constitute the electrode assembly 14, and particularly a positive electrode active material constituting the positive electrode 11 will be described in detail.

[Positive Electrode]

The positive electrode 11 has a positive electrode core and a positive electrode mixture layer provided on a surface of the positive electrode core. For the positive electrode core, a foil of a metal stable within a potential range of the positive electrode 11, such as aluminum and an aluminum alloy, a film in which such a metal is disposed on a surface layer thereof, and the like may be used. The positive electrode mixture layer includes a positive electrode active material, a conductive agent, and a binder, and is preferably provided on both surfaces of the positive electrode core. The positive electrode 11 may be produced by, for example, applying a positive electrode mixture slurry including the positive electrode active material, the conductive agent, the binder, and the like on the positive electrode core, drying and subsequently compressing the applied film to form the positive electrode mixture layers on both the surfaces of the positive electrode core.

Examples of the conductive agent included in the positive electrode mixture layer may include a carbon material such as carbon black, acetylene black, Ketjenblack, and graphite. Examples of the binder included in the positive electrode mixture layer may include a fluororesin such as polytetrafluoroethylene (PTFE) and polyvinylidene fluoride (PVdF), polyacrylonitrile (PAN), a polyimide resin, an acrylic resin, and a polyolefin resin. With these resins, a cellulose derivative such as carboxymethyl cellulose (CMC) or a salt thereof, polyethylene oxide (PEO), and the like may be used in combination.

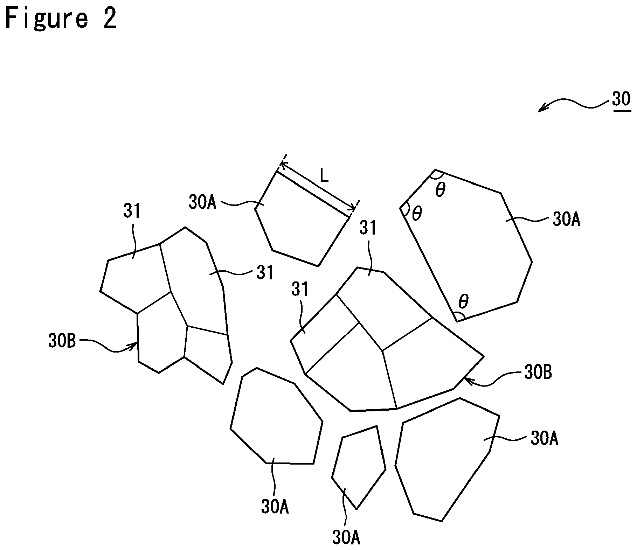

FIG. 2 is a schematic view illustrating a particle cross section of a positive electrode active material 30. As illustrated in FIG. 2, the positive electrode active material 30 is composed of at least one of single particles 30A and secondary particles 30B each including 10 or less primary particles 31, the single particles 30A and the primary particles 31 being a lithium-transition metal composite oxide containing 85 mol% or more of Ni based on the total number of moles of metal elements excluding Li. When the Ni content is 85 mol% or more, the battery capacity can be increased. Meanwhile, a large Ni content causes a large change in volume of the positive electrode active material 30 with charging and discharging, and the particle cracking is likely to occur. Improvement in the particle shape of the positive electrode active material 30 achieves a high capacity and high durability, which will be described below in detail.

The lithium-transition metal composite oxide preferably contains another metal element in addition to Li and Ni. Examples of the other metal element include Co, Al, Mn, B, Mg, Ti, V, Cr, Fe, Cu, Zn, Ga, Sr, Zr, Nb, In, Sn, Ta, and W. Among them, at least Co and Al are preferably contained. The lithium-transition metal composite oxide has, for example, a Mn content being less than 10 mol% based on a total number of moles of metal elements excluding Li, and may contain substantially no Mn.

An example of preferable lithium-transition metal composite oxides is a composite oxide represented by the composition formula $Li_\alpha Ni_x Co_y Al_z O_2$, wherein $0.9 \leq \alpha \leq 1.2$, $0.85 \leq x \leq 0.95$, $0.01 \leq y \leq 0.15$, and $0.01 \leq z \leq 0.10$. As shown with the composition formula, the upper limit of the Ni content is preferably 0.95 mol% and predetermined amounts of Co and Al are preferably added. In this case, the crystal structure is stabilized to contribute to the improvement in the durability.

A Li-site occupancy of the lithium-transition metal composite oxide is 98 % or more. The Li-site occupancy within the above range can achieve high capacity. The Li-site occupancy means a percentage of Li in Li sites in the crystal structure, and is determined by Rietveld analysis of an X-ray diffraction pattern of the lithium-transition metal composite oxide. The Li-site occupancy may be substantially 100%.

[Proportion of Metal Elements Excluding Li in Li Layer of Lithium-Transition Metal Composite Oxide]

A proportion of metal elements excluding Li that are present in a Li layer is determined by Rietveld analysis of an X-ray diffraction pattern obtained by X-ray diffraction measurement of the lithium-transition metal composite oxide. The X-ray diffraction pattern is obtained by a powder X-ray diffraction method using a powder X-ray diffraction apparatus (manufactured by Rigaku Corporation, product name "RINT-TTR," radiation source: Cu-K$\alpha$) and under the following conditions.

Measuring Range: 15° to 120°
Scanning Rate: 4°/min
Analyzing Range: 30° to 120°
Background: B-spline
Profile Function: Split pseudo-Voigt function
Restricting Conditions: Li(3a) + Ni(3a) = 1
Ni(3a) + Ni(3b) = y (y represents each Ni content ratio)
ICSD No.: 98-009-4814

For the Rietveld analysis of the X-ray diffraction pattern, PDXL2 (manufactured by Rigaku Corporation), which is a software for Rietveld analysis, is used.

In the positive electrode active material 30, a particle cross section of the single particle 30A and the primary particle 31 has a polygon shape including a side having a length of 1.5 $\mu$m or longer, and at least three interior angles $\theta$ of the polygon are 45° to 160°. That is, the positive electrode active material 30 is at least one of the single particles 30A each composed of one primary particle and the secondary particles 30B each composed of a small number, 10 or less, of primary particles 31, and is an angular particle with a rugged exterior shape. Such a particle shape inhibits the particle cracking to remarkably improve the durability.

The particle cross-sectional shape of the single particle 30A may be any polygon shape as long as it includes a side having a length of 1.5 $\mu$m or longer and three or more interior angles $\theta$ are 45° to 160°, and may be a substantially tetragonal shape, a substantially pentagonal shape, a substantially hexagonal shape, or a polygon shape including further more angles. A length L of the longest side is, for example 3 $\mu$m to 20 $\mu$m, and preferably 3 $\mu$m to 15 $\mu$m. In the single particle 30A, all the interior angles $\theta$ may be 45° to 160°, 60° to 150°, or 70° to 130°, and three or more interior angles $\theta$ of 90° or less may be present.

The particle cross-sectional shape of the primary particle 31 constituting the secondary particle 30B may be any polygon shape as long as it includes a side having a length of 1.5 $\mu$m or longer and three or more interior angles $\theta$ are 45° to 160°, similar to the single particle 30A, and may be a substantially tetragonal shape, a substantially pentagonal shape, a substantially hexagonal shape, or a polygon shape including further more angles. A length L of the longest side is, for example 1.5 $\mu$m to 15 $\mu$m, and preferably 1.5 $\mu$m to 10 $\mu$m. In the primary particle 31, all the interior angles $\theta$ may be 45° to 160°, 60° to 150°, or 70° to 130°, and three or more interior angles $\theta$ of 90° or less may be present.

On the particle cross-sectional shape (the above polygon shape) of the primary particle 31, 20% or more of sides are present on a surface of the secondary particle 30B, for example, and contacted with a gap in the positive electrode mixture layer. The gap of the positive electrode mixture layer is a space present between the particles of the positive electrode active material 30 (the single particles 30A and the secondary particles 30B). The secondary particle 30B includes, for example, no primary particle that is present only inside the particle and that does not appear on the particle surface. In this case, at least part of all the primary particles 31 constituting the secondary particle 30B is present on the surface of the secondary particle 30B.

An average porosity of the single particles 30A is preferably 1% or less, and more preferably 0.3% or less. The average porosity means an average value of a proportion of a gap in the single particle 30A, and is measured by a method described later. Similarly, an average porosity of the secondary particles 30B is preferably 3% or less, and more preferably 2% or less. The single particle 30A and the secondary particle 30B are dense particles having a small amount of gaps, and the average porosity may be less than 1%.

The average porosities of the single particle 30A and the secondary particle 30B are measured by the following method.

(1) By using an ion-milling machine (for example, IM4000PLUS, manufactured by Hitachi High-Tech Corporation), a cross section of the positive electrode mixture layer including the single particles 30A and the secondary particles 30B is exposed.
(2) By using a scanning electron microscope (SEM), a backscattered electron image of the exposed cross section of the positive electrode mixture layer is photographed. A magnification when the backscattered electron image is photographed is 1000 to 10000.

(3) The SEM image of the cross section of the positive electrode mixture layer is input to a computer, and color-coded with two colors from the contrast using an image analysis software to specify a color with lower contrast as the gap.

(4) On single particles and secondary particles that have a diameter of 2.5 $\mu$m or longer and that are randomly selected from the processed image, gap areas of 100 particles are determined, and a proportion of the gap area in the cross-sectional area of the particle (porosity) is calculated to be averaged.

The positive electrode active material 30 may be composed of substantially only the single particles 30A, or may be composed of substantially only the secondary particles 30B, but is preferably a mixture of the single particles 30A and the secondary particles 30B. An existing ratio between the single particles 30A and the secondary particles 30B is not particularly limited. More single particles 30A may be present, or more secondary particles 30B may be present. The positive electrode active material 30 may include particles other than the single particles 30A and the secondary particles 30B within a range in that an object of the present disclosure is not impaired. A content rate of the single particles 30A and the secondary particles 30B is preferably 50 mass% or more, more preferably 70 mass% or more, and particularly preferably 80 mass% or more.

The positive electrode mixture layer includes the positive electrode active material 30 as a main component. A content rate of the positive electrode active material 30 is preferably 90 mass% or more, and as a preferable example, 90 mass% to 98 mass%, based on a mass of the positive electrode mixture layer. The positive electrode mixture layer preferably includes the conductive agent and the binder, as described above. Each content of the conductive agent and the binder is, for example, 0.5 mass% to 5 mass% based on the mass of the positive electrode mixture layer.

A BET specific surface area of the positive electrode mixture layer is preferably 2.6 m$^2$/g or less before charging and discharging the battery. The BET specific surface area of the positive electrode mixture layer may be measured by removing the positive electrode mixture layer from the positive electrode core and by using a BET specific surface area measurement device with nitrogen adsorption/desorption. The BET specific surface area of the positive electrode mixture layer is approximated with a BET specific surface area of the positive electrode active material 30, which is the main component. Because of having high durability, the positive electrode active material 30 has little increase in the BET specific surface area even after a charge-discharge cycle.

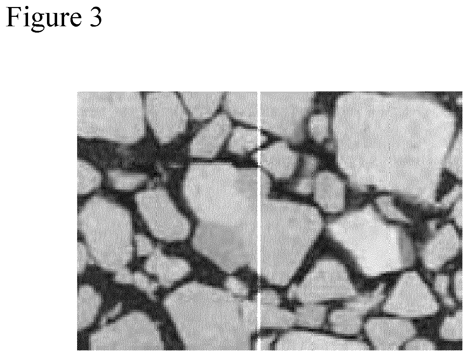

FIG. 3 is a cross-sectional image of the particles of the positive electrode active material photographed with the scanning electron microscope (SEM). As shown in FIG. 3, the particles of the positive electrode active material of an example of the embodiment are angular particles with a rugged exterior shape. In addition, the positive electrode active material includes: single particles in which no particle boundary is present in the particle; and secondary particles each formed by aggregation of a small number of primary particles. A particle cross-sectional shape of a large part, for example 80 mass% or more, of the particles constituting the positive electrode active material is a polygon shape including a side having a length of 1.5 $\mu$m or longer and having three or more interior angles $\theta$ of 45° to 160°.

The positive electrode active material 30 may be synthesized by, for example, mixing a transition metal compound containing Ni and Co, an aluminum compound, and a lithium compound; calcining the mixture at a high temperature; and further calcining the mixture at a low temperature. The first calcination is performed at a temperature higher than a calcination temperature of a conventional common positive electrode active material by 100°C to 150°C. The second calcination is performed at a temperature lower than the temperature of the first calcination by 100°C to 150°C, that is, performed at a calcination temperature of a conventional common positive electrode active material. An example of specific calcination temperatures is as follows: the temperature of the first calcination is 720°C to 1000°C; and the temperature of the second calcination is 600°C to 800°C. The difference in temperature between each calcination step is preferably 50°C or more. In this case, the positive electrode active material 30 having a high Li-site occupancy and composed of angular particles may be obtained.

[Negative Electrode]

The negative electrode 12 has a negative electrode core and a negative electrode mixture layer provided on a surface of the negative electrode core. For the negative electrode core, a foil of a metal stable within a potential range of the negative electrode 12, such as copper, a film in which such a metal is disposed on a surface layer thereof, and the like may be used. The negative electrode mixture layer includes a negative electrode active material and a binder, and is preferably provided on both surfaces of the negative electrode core. The negative electrode 12 may be produced by, for example, applying a negative electrode mixture slurry including the negative electrode active material, the conductive agent, the binder, and the like on the surface of the negative electrode core, drying and subsequently compressing the applied film to form the negative electrode mixture layers on both the surfaces of the negative electrode core.

The negative electrode mixture layer includes, for example, a carbon-based active material to reversibly occlude and release lithium ions, as the negative electrode active material. The carbon-based active material is preferably a graphite such as: a natural graphite such as flake graphite, massive graphite, and amorphous graphite; and an artificial graphite such as massive artificial graphite (MAG) and graphitized mesophase-carbon microbead (MCMB). For the negative electrode active material, a Si-based active material composed of at least one of Si and a Si-containing compound may also be used, and the carbon-based active material and the Si-based active material may be used in combination.

For the conductive agent included in the negative electrode mixture layer, a carbon material such as carbon black, acetylene black, Ketjenblack, and graphite may be used similar to that in the positive electrode 11. For the binder included in the negative electrode mixture layer, a fluororesin, PAN, a polyimide, an acrylic resin, a polyolefin, and the like may be used similar to that in the positive electrode 11, but styrene-butadiene rubber (SBR) is preferably used. The negative electrode mixture layer preferably further includes CMC or a salt thereof, polyacrylic acid (PAA) or a salt thereof, polyvinyl alcohol (PVA), and the like. Among them, SBR; and CMC or a salt thereof, or PAA or a salt thereof are preferably used in combination.

[Separator]

For the separator 13, a porous sheet having an ion permeation property and an insulation property is used. Specific examples of the porous sheet include a fine porous thin film, a woven fabric, and a nonwoven fabric. For a material of the separator 13, a polyolefin such as polyethylene, polypropylene, and a copolymer of ethylene and an $\alpha$-olefin, cellulose, and the like are preferable. The separator 13 may have any of a single-layered structure and a multilayered structure. On a surface of the separator 13, a heat-resistant layer including inorganic particles, a heat-resistant layer constituted with a highly heat-resistant resin such as an aramid resin, a polyimide, and a polyamideimide, and the like may be formed.

EXAMPLES

Hereinafter, the present disclosure will be further described with Examples, but the present disclosure is not limited to these Examples.

<Example 1>

[Synthesis of Positive Electrode Active Material]

Lithium hydroxide and a nickel-cobalt-aluminum composite oxide were mixed at a predetermined mass ratio, the mixture was calcined at 775°C for 30 hours, and then further calcined at 725°C for 30 hours to obtain a lithium-transition metal composite oxide represented by the composition formula $LiNi_{0.88}Co_{0.09}Al_{0.03}O_2$ (positive electrode active material). The obtained positive electrode active material was composed of single particles and secondary particles each including 10 or less primary particles that had a particle cross section with a polygon shape including a side having a length of 1.5 $\mu$m or longer and had at least three interior angles of the polygon being 45° to 160°. A content rate of the single particles and the secondary particles was estimated to be 90 mass% or more. The obtained positive electrode active material had a Li-site occupancy of 98.9% and an average porosity of 0.3%.

<Example 2>

[Synthesis of Positive Electrode Active Material]

Lithium hydroxide and a nickel-cobalt-aluminum composite oxide were mixed at a predetermined mass ratio, the mixture was calcined at 750°C for 30 hours, and then further calcined at 700°C for 30 hours to obtain a lithium-transition metal composite oxide represented by the composition formula $LiNi_{0.91}Co_{0.045}Al_{0.045}O_2$ (positive electrode active material). The obtained positive electrode active material was composed of single particles and secondary particles each including 10 or less primary particles that had a particle cross section with a polygon shape including a side having a length of 1.5 $\mu$m or longer and had at least three interior angles of the polygon being 45° to 160°. A content rate of the single particles and the secondary particles was estimated to be 90 mass% or more. The obtained positive electrode active material had a Li-site occupancy of 98.5% and an average porosity of 0.1%.

[Production of Positive Electrode]

The above lithium-transition metal composite oxide was used as the positive electrode active material. The positive electrode active material, acetylene black, and polyvinylidene fluoride were mixed at a predetermined solid content mass ratio, and N-methyl-2-pyrrolidone (NMP) was used as a dispersion medium to prepare a positive electrode mixture slurry. Then, the positive electrode mixture slurry was applied on a positive electrode core made of aluminum foil, the applied film was dried and compressed, and then cut to a predetermined electrode size to obtain a positive electrode.

[Production of Negative Electrode]

A low-BET graphite, a dispersion of styrene-butadiene rubber (SBR), and sodium carboxymethyl cellulose (CMC-Na) were mixed at a predetermined solid content mass ratio, and water was used as a dispersion medium to prepare a negative electrode mixture slurry. Then, this negative electrode mixture slurry was applied on both surfaces of a negative electrode core made of copper foil, the applied film was dried and compressed, and then cut to a predetermined electrode size to produce a negative electrode in which negative electrode mixture layers were formed on both the surfaces of the negative electrode core. The low-BET graphite is graphite particles in which a volume of pores having a pore diameter, determined by a DFT method with a nitrogen adsorption isotherm, of 2 nm or smaller per mass is 0.3 $mm^2$/g or less, and the graphite particles having a specific surface area with a BET method of 1.5 $m^2$/g or less.

[Preparation of Non-Aqueous Electrolyte Liquid]

Ethylene carbonate (EC), ethyl methyl carbonate (EMC), and dimethyl carbonate (DMC) were mixed at a predetermined volume ratio. Into the mixed solvent, $LiPF_6$ was added to obtain a non-aqueous electrolyte liquid.

[Production of Non-Aqueous Electrolyte Secondary Battery]

The above positive electrode to which a positive electrode lead made with aluminum was attached and the above negative electrode to which a negative electrode lead made with nickel was attached were spirally wound with a separator made with polyethylene interposed therebetween, and flatly formed to produce a wound electrode assembly. This electrode assembly was housed in an exterior housing body constituted with an aluminum laminate, the above non-aqueous electrolyte liquid was injected, and then an opening of the exterior housing body was sealed to produce a non-aqueous electrolyte secondary battery for evaluation.

[Durability Evaluation of Positive Electrode Active Material]

The produced battery was charged and discharged with 1000 cycles under the following conditions, and then the battery was disassembled to measure a BET specific surface area of the positive electrode mixture layer. The measurement result was compared with the BET specific surface area of the positive electrode mixture layer before charging and discharging to calculate a rate of increase in the BET specific surface area. The evaluation results are shown Table 1.
Charge and discharge conditions: Under a temperature environment at 25°C, the battery was charged at a constant current of 0.5 C until a battery voltage of 4.1 V, additionally charged at 4.1 V until 0.02 C, then rested for 30 minutes, and discharged at a current capacity at 0.5 E until the battery voltage of 2.5 V.

[Evaluation of Capacity Maintenance Rate of Battery]

The charging and discharging was performed with 1000 cycles under a temperature environment at 45°C to calculate a capacity maintenance rate with the following formula. The evaluation results are shown in Table 1.

Capacity Maintenance Rate = (Discharge Capacity after 1000 Cycles/Initial Discharge Capacity) $\times$ 100

<Comparative Example>

A non-aqueous electrolyte secondary battery was produced to evaluate the durability of the positive electrode active material and the capacity maintenance rate of the battery (note that, the number of charge-discharge cycle was changed to 600) in the same manner as in Examples except that the calcination was performed once, and the calcination conditions were 760°C for 3 hours in the synthesis of the positive electrode active material. The obtained positive electrode active material was composed of round secondary particles formed by aggregation of many primary particles. The obtained positive electrode active material had a Li-site occupancy of 99.5% and an average porosity of 1.7%.

[Table 1]

| | Example 1 | Example 2 | Comparative Example |
|---|---|---|---|
| Particle cross-sectional shape | Polygon shape | Polygon shape | Substantially circular shape |

(continued)

|  | Example 1 | Example 2 | Comparative Example |
|---|---|---|---|
| BET specific surface area (initial) | 2.50m$^2$/g | - | 2.69m$^2$/g |
| BET specific surface area (after charging and discharging) | 2.61m$^2$/g | - | 3.52m$^2$/g |
| Rate of increase in specific surface area | 4.2% | - | 30.7% |
| Capacity maintenance rate | 90.8% | 90.8% | 81.9% |

As shown in Table 1, Examples had a lower rate of increase in the BET specific surface area of the positive electrode mixture layer after the charge-discharge cycle, and a higher capacity maintenance rate of the battery than Comparative Example. As above, the BET specific surface area of the positive electrode mixture layer is approximated with the BET specific surface area of the positive electrode active material, and the BET specific surface area increases due to cracking of the active material particles. Thus, the low rate of increase in the BET specific surface area means inhibition of the particle cracking and high durability of the positive electrode active material. Therefore, the positive electrode active materials of Examples are unlikely to cause the particle cracking with charging and discharging and have high durability compared with the positive electrode active material of Comparative Example.

REFERENCE SIGNS LIST

10 Non-aqueous electrolyte secondary battery
11 Positive electrode
12 Negative electrode
13 Separator
14 Electrode assembly
16 Exterior housing can
17 Sealing assembly
18, 19 Insulating plate
20 Positive electrode lead
21 Negative electrode lead
22 Grooved part
23 Internal terminal plate
24 Lower vent member
25 Insulating member
26 Upper vent member
27 Cap
28 Gasket
30 Positive electrode active material
30A Single particle
30B Secondary particle
31 Primary particle

**Claims**

1. A positive electrode active material (30) for a non-aqueous electrolyte secondary battery (10), composed of at least one of single particles (30A) and secondary particles (30B) each including 10 or less primary particles (31), the single particles (30A) and the primary particles (31) being a lithium-transition metal composite oxide containing 85 mol% or more of Ni based on a total number of moles of metal elements excluding Li, wherein
a Li-site occupancy of the lithium-transition metal composite oxide is 98% or more, a particle cross section of the single particles (30A) and the primary particles (31) has a polygon shape including a side having a length of 1.5 μm or longer, and at least three interior angles of the polygon are 45° to 160°.

2. The positive electrode active material (30) for a non-aqueous electrolyte secondary battery (10) according to claim 1, wherein 20% or more of sides of the primary particle (31) are present on a surface of the secondary particle (30B).

3. The positive electrode active material (30) for a non-aqueous electrolyte secondary battery (10) according to claim 1 or 2, wherein an average porosity of the single particles (30A) and the secondary particles (30B) is 3% or less.

4. A non-aqueous electrolyte secondary battery (10), comprising:

a positive electrode (11) having: a positive electrode core; and a positive electrode mixture layer provided on a surface of the positive electrode core and including the positive electrode active material (30) according to any one of claims 1 to 3;
a negative electrode (12); and
a non-aqueous electrolyte, wherein
a BET specific surface area of the positive electrode mixture layer before charging and discharging is 2.6 m$^2$/g or less.

**Patentansprüche**

1. Positives Elektrodenaktivmaterial (30) für eine Sekundärbatterie mit nichtwässrigem Elektrolyt (10), zusammengesetzt aus mindestens einem von Einzelpartikeln (30A) und Sekundärpartikeln (30B), die jeweils 10 oder weniger Primärpartikel (31) umfassen, wobei die Einzelpartikel (30A) und die Primärpartikel (31) ein Lithium-Übergangsmetall-Kompositoxid sind, das 85 Mol-% oder mehr Ni enthält, bezogen auf eine Gesamtzahl von Molen an Metallelementen unter Ausschluss von Li, wobei
eine Li-Platz-Besetzung des Lithium-Übergangsmetall-Kompositoxids 98 % oder mehr beträgt, ein Partikelquerschnitt der Einzelpartikel (30A) und der Primärpartikel (31) eine Polygonform aufweist, die eine Seite mit einer Länge von 1,5 μm oder mehr umfasst, und mindestens drei Innenwinkel des Polygons 45° bis 160° betragen.

2. Positives Elektrodenaktivmaterial (30) für eine Sekundärbatterie mit nichtwässrigem Elektrolyt (10) nach Anspruch 1, wobei 20 % oder mehr der Seiten des Primärpartikels (31) auf einer Oberfläche des Sekundärpartikels (30B) vorhanden sind.

3. Positives Elektrodenaktivmaterial (30) für eine Sekundärbatterie mit nichtwässrigem Elektrolyt (10) nach Anspruch 1 oder 2, wobei eine durchschnittliche Porosität der Einzelpartikel (30A) und der Sekundärpartikel (30B) 3 % oder weniger beträgt.

4. Sekundärbatterie mit nichtwässrigem Elektrolyt (10), umfassend:

eine positive Elektrode (11), die aufweist: einen positiven Elektrodenkern; und eine positive Elektrodenmischungsschicht, die auf einer Oberfläche des positiven Elektrodenkerns vorgesehen ist und das positive Elektrodenaktivmaterial (30) nach einem der Ansprüche 1 bis 3 enthält;
eine negative Elektrode (12); und
einen nichtwässrigen Elektrolyten, wobei
eine BET-spezifische Oberfläche der positiven Elektrodenmischungsschicht vor dem Laden und Entladen 2,6 m$^2$/g oder weniger beträgt.

**Revendications**

1. Matériau actif d'électrode positive (30) pour une batterie secondaire à électrolyte non aqueux (10), composé d'au moins l'une de particules individuelles (30A) et de particules secondaires (30B) comprenant chacune 10 particules primaires (31) ou moins, les particules individuelles (30A) et les particules primaires (31) étant un oxyde composite de métal de transition au lithium contenant 85 % en moles ou plus de Ni sur la base d'un nombre total de moles d'éléments métalliques à l'exclusion de Li, dans lequel
un taux d'occupation du site Li de l'oxyde composite de métal de transition au lithium est de 98 % ou plus, une section transversale de particule des particules individuelles (30A) et des particules primaires (31) a une forme polygonale comprenant un côté ayant une longueur de 1,5 μm ou plus, et au moins trois angles intérieurs du polygone sont de 45° à 160°.

2. Matériau actif d'électrode positive (30) pour une batterie secondaire à électrolyte non aqueux (10) selon la revendication 1, dans lequel 20 % ou plus des côtés de la particule primaire (31) sont présents sur une surface de la particule secondaire (30B).

3. Matériau actif d'électrode positive (30) pour une batterie secondaire à électrolyte non aqueux (10) selon la revendication 1 ou 2, dans lequel une porosité moyenne des particules individuelles (30A) et des particules secondaires (30B) est de 3 % ou moins.

4. Batterie secondaire à électrolyte non aqueux (10), comprenant :

   une électrode positive (11) comportant : un noyau d'électrode positive ; et une couche de mélange d'électrode positive disposée sur une surface du noyau d'électrode positive et comprenant le matériau actif d'électrode positive (30) selon l'une quelconque des revendications 1 à 3 ;
   une électrode négative (12) ; et
   un électrolyte non aqueux, dans laquelle
   une surface spécifique BET de la couche de mélange d'électrode positive avant charge et décharge est de 2,6 $m^2$/g ou moins.

# Figure 1

Figure 2

# Figure 3

**EP 4 145 563 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018045998 A

- US 20100276217 A1